# EUROPEAN PATENT APPLICATION

(11) **EP 4 424 520 A1**
(43) Date of publication of application: **04.09.2024**
(21) Application number: 22884149.0
(22) Date of filing: 14.06.2022
(51) Int. Cl.: B60B 17/00, B61F 13/00, B21H 1/04

(54) **RAILWAY VEHICLE WHEEL**

(30) Priority: 21.10.2021 RU 2021130648
(71) Applicant: AKTSIONERNOE OBSCHESTVO "EVRAZ NIZHETAGILSKY METALLURGICHESKY KOMBINAT", Tagil, 622025 (RU)
(72) Inventor: VASILEV, Aleksei Aleksandrovich, Nizhny Tagil, 622042 (RU); ILINYKH, Roman Aleksandrovich, Tagil, 622042 (RU); BESPAMYATNYKH, Aleksandr Yurevich, Tagil, 622049 (RU); FLATOV, Vitaly Gennadevich, Mytyschy, 141021 (RU)
(74) Representative: Spengler, Robert
(86) International application number: PCT/RU2022/050184
(87) International publication number: WO 2023/068966

(57) **Abstract**

The invention relates to wheels of railway vehicles, and it may be used in transportation industry. The subject matter of the invention is a railway vehicle wheel having a central axial line of a transversal profile of a web that is formed by a curve that passes through three points, while a first point is arranged in a connection site of the web and a crown, a second point is arranged in a central portion of the web, and a third point is arranged in a connection site of the web and a hub, wherein the second point is further biased towards the crown, and a distance between this point and the third point is greater than a distance between this point and the first point. A technical effect lies in increasing the reliability of the railway vehicle wheel. 5 d. cl., 1 il.

## Description

The invention relates to transport machine engineering, in particular, to wheels of railway vehicles, and it may be used in transportation industry.

A railway vehicle wheel is known, the wheel comprises a crown, a hub and a web, and a central axial line of a transversal profile of the web is formed by a straight line that passes through three points, while a first point is arranged in a connection site of the web and the crown, a second point is arranged in a central portion of the web, and a third point is arranged in a connection site of the web and the hub, and all three points are arranged on a central sectional plane of the wheel [RU2589814C1, publication date: 10.07.2016, IPC: B60B 17/00, B61F 13/00, B21H 1/04].

A drawback of this known technical solution lies in a low endurance strength due to an insufficient dampening of stresses which appear across the entire wheel during its operation. This leads to a risk of a premature deformation of a crown of the wheel and its failure.

A railway vehicle wheel is known, the wheel comprises a crown, a hub and a web, and a central axial line of a transversal profile of the web is formed by a curve that passes through three points, while a first point is arranged in a connection site of the web and the crown, a second point is arranged in a central portion of the web, and a third point is arranged in a connection site of the web and the hub, and the second point is arranged on a central sectional plane of the wheel, while the first point and the third point are biased in opposite directions relative to said plane [RU187467U1, publication date: 06.03.2019, IPC: B60B 17/00].

This known technical solution is advantageous in increased strength indexes caused by use of a radial curvature of the transversal profile of the web which facilitates distribution and dampening of the load applied to the wheel during its operation. This structure enables to provide a significant prolongation of a service life of both the crown of the wheel and the entire wheel.

However, a drawback of this known technical solution is a high stress that concentrates in sites, where the web abuts the crown and the hub, that is transmitted to the wheel during its operation and that is increased due to its non-uniform distribution. This leads to a high risk of a premature deformation of a crown of the wheel and its failure.

As a prototype, a railway vehicle wheel is taken, the wheel comprises a crown, a hub and a web, and a central axial line of a transversal profile of the web is formed by a curve that passes through three points, while a first point is arranged in a connection site of the web and the crown, a second point is arranged in a central portion of the web, and a third point is arranged in a connection site of the web and the hub, and the first point and the second point are biased in the same direction from a central sectional plane of the wheel, and the third point is biased in opposite direction from both the central sectional plane of the wheel and these points [RU2486063C1, publication date: 27.06.2013, IPC: B60B 17/00, B60B 3/02, B61F 13/00, B21H 1/04].

The prototype is advantageous in increased strength indexes caused by additional curvature of the transversal profile of the web which facilitates more uniform distribution and dampening of the load applied to the wheel during its operation. Owing to more uniform distribution of the stress that is transmitted to the wheel during operation thereof, this structure allows to provide a significant reduction of a risk of premature deformation of the crown of the wheel and its failure.

A drawback of the prototype lies in a relative low level of reliability, in particular, deformation resistance of the railway vehicle wheel. Despite the fact that the described structure of the wheel provides distribution and dampening of stresses which are transferred thereto during operation, it does not provide their more uniform distribution across the entire wheel which causes their cumulative concentration in critical sites of joining of the web to the hub or to the crown. This may lead to deformation of the web, crown or other critically important structural elements of the wheel and its subsequent failure. Besides, this damage of the wheel may lead to deformation of railway track elements which will make their future use impossible which, in turn, will deteriorate performance characteristics of the railway vehicle wheel.

A technical problem to be solved by the invention is to improve performance characteristics of the railway vehicle wheel.

A technical effect to be achieved by the invention is increasing the reliability of the railway vehicle wheel.

The subject matter of the invention is as follows.

A railway vehicle wheel comprises a crown, a hub and a web, and a central axial line of a transversal profile of the web is formed by a curve that passes through three points, while a first point is arranged in a connection site of the web and the crown, a second point is arranged in a central portion of the web, and a third point is arranged in a connection site of the web and the hub, and the first point and the second point are biased in the same direction from a central sectional plane of the wheel, and the third point is biased in opposite direction from both the central sectional plane of the wheel and these points. In contrast to the prototype, the second point is further biased towards the crown, and a distance between this point and the third point is greater than a distance between this point and the first point.

The crown of the railway vehicle wheel enables to create a rolling surface of the wheel. The hub of the railway vehicle wheel is provided with an opening and is intended to fix the wheel on a shaft of the railway vehicle.

The web of the railway vehicle wheel comprises an inner surface and an outer surface which are formed by groups of radial curves which correspond to each other. Therewith, a portion of the outer surface that corresponds to a convex portion of the inner surface is made concave or vice versa. Therewith, an abutment of the web to the hub and an abutment of the web to the crown are formed by fillets having cross sections which are presented by radial curves.

The central axial line of the transversal profile of the web is formed by the curve that passes through three points, while the first point is arranged on the axial line of the cross section of the web in the abutment site of the web to the crown, the second point is arranged on the axial line of the cross section of the web at a maximum distance from the central sectional plane of the wheel, and the third point is arranged on the axial line of the cross section of the web in the abutment site of the web to the hub. The central plane means a plane that passes through a middle of the transversal profile of the wheel and is perpendicular to its rotation axis.

The first point and the second point are biased in the same direction from the central sectional plane of the wheel, and the third point is biased in opposite direction relative to this plane and to these points. This provides an additional curvature of the web that facilitates more uniform distribution of the stress that is applied to the wheel during operation. In a preferable embodiment, a distance between the first point and the central sectional plane of the wheel is smaller than the corresponding distance from the second point, thereby providing strength and elasticity which are required to provide the uniform distribution of the stress that is applied to the wheel during its operation.

Therewith, in order to further increase the uniformity of the distribution of the stress that is applied to the wheel during operation, a distance between the first point and the central sectional plane of the wheel may be 0.081-0.150 of the crown width, a distance between the second point and the central sectional plane of the wheel is not more than 0.34 of the crown width, and a distance between the third point and the central sectional plane of the wheel is 0.11-0.90 of the crown width.

The second point is further biased towards the crown, and a distance between this point and the third point is greater than a distance between this point and the first point. This provides the most uniform distribution of loads across the entire wheel, while avoiding their cumulative concentration in critical locations of abutment of the web to the hub or to the crown, thereby increasing the reliability of the railway vehicle wheel. Therewith, a distance between the first point and the second point may be 1.1-4 times smaller than a distance between the third point and the second point, thereby increasing the strength and elasticity, as well as uniformity of distribution of the stress that is applied to the wheel during its operation. Therewith, in the most preferable embodiment, the distance between the first point and the second point may be 1.2-3 times smaller than the distance between the third point and the second point.

Furthermore, in order to increase the reliability of the wheel owing to increase of the mechanical strength, the web of the railway wheel may be formed by the inner surface and the outer surface such that a thickness of the cross section of the web may increase from the first point to the third point or only from the second point to the third point. Therewith, the thickness of the cross section of the web in the third point may be increased by altering geometry of the radial curve that outlines the cross section of the concave portion of the outer surface of the web that is located in a gap between the second point and the third point. This is provided by an additional radial curve that is provided at an intersection between the described line and the central sectional plane of the wheel.

The invention may be made of known materials by means of known means which testifies that it meets the patentability criterion "industrial applicability".

The invention is characterized by a previously unknown set of features, wherein the second point is additionally biased towards the crown, and the distance between this point and the third point is greater than the distance between this point and the first point, thereby allowing to increase the deformation resistance in a critical area of the wheel, namely, in the abutment area between the web and the hub, reducing the risk of deformation of the wheel under alternating loads and providing the uniform distribution of the stresses that are applied thereto during operation. This avoids formation of weak and easily deformable areas of the structure as well as reduction of movement of the crown in axial direction which facilitates better maintaining of the track by the wheel during braking and reduces possible deformation of the web, crown or other critically important structural elements of the wheel and its subsequent failure.

This provides achievement of the technical effect that lies in increase of the reliability of the railway transport wheel, thereby improving the performance characteristics of the railway vehicle wheel.

The invention possesses the set of essential features which is not taught by the prior art which testifies that it meets the patentability criterion "novelty".

The prior art teaches the railway vehicle wheel, wherein the central axial line of the cross section of the web is formed by the straight line and is arranged perpendicularly relative to the rotation axis of the wheel. Also, the prior art teaches the railway vehicle wheel, wherein the central axial line of the cross section of the web is radial. Also, the prior art teaches the railway vehicle wheel, wherein the central axial line of the transversal profile of the web is formed by the curve that passes through three points which are arranged in the connection site of the web and the crown, in the central portion of the web and in the connection site of the web and the hub.

However, the prior art does not teach any railway vehicle wheel in which the second point is further biased towards the crown, and a distance between this point and the third point is greater than a distance between this point and the first point. Also, the prior art does not teach any technical effect provided by this feature that lies in increase of the reliability of the railway vehicle wheel.

Besides, a synergistic effect provided by combined use of the inventive features and this bias of the points characterizing the web shape is not taught as well, the synergistic effect being uniform distribution of the stresses which are applied to the wheel during its operation, thereby allowing to reduce the axial movement of the crown which not only increases the reliability of the railway vehicle wheel, but also facilitates better maintaining the track by the wheel during braking. This is provided by the fact that the arc that is formed in the central portion of the web by its side surfaces facilitates reduction of the deformation influence acting both onto the crown and onto the entire wheel. Furthermore, the bias of the first point and the second point in the same direction and the bias of the third point in opposite direction increases the ability of the wheel to accept and to distribute the load that is applied thereto under gravity force as well as the load that appears additionally during turns and braking.

The additional bias of the second point towards the crown allows the web to better percept influences made thereon, including a thermal influence by a shoe during braking, more particularly, to distribute the received stress more uniformly across the entire wheel body, while avoiding formation of any weak and easily deformable areas of the structure which is of particular importance in the most curved areas of the web. This will allow to increase the reliability of the wheel significantly, to prolong the service life and to improve other performance characteristics thereof. In particular, this will allow to reduce the movement of the crown in axial direction, thereby facilitating better maintaining the track by the wheel during braking. The formation of the web surface by the groups of the radial curves corresponding to each other, as well as the abutment of the web by the radial curves to the crown, provide the shape of the web having the smoothest curvatures which also facilitates more uniform distribution and dampening of the stress that is applied to the wheel during operation. In view of this, the invention meets the patentability criterion "inventive step".

The invention is explained by the following figures.

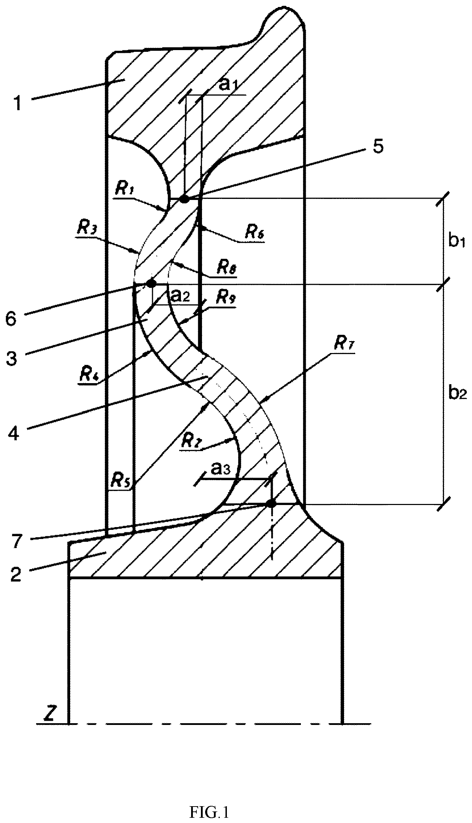

Fig. 1 illustrates a cross section of the railway vehicle wheel.

In order to illustrate possible implementation and to provide more thorough understanding of the subject matter of the invention, an embodiment thereof is provided below, and this embodiment may be altered or supplemented in any way, and the invention is not limited by the provided embodiment in any way.

The invention operates as follows.

A railway vehicle wheel (Embodiment 1) has a central plane α that is perpendicular to a rotation axis Z of the wheel, comprises a crown 1, a hub 2 and a web 3, while a central axial line 4 of a transversal profile of the web is formed by a curve that passes through points 5, 6 and 7, while the point 5 is arranged in a connection site of the web 3 and the crown 1, the point 6 is arranged in a central portion of the web, and the point 7 is arranged in a connection site of the web 3 and the hub 2; wherein the point 5 and the point 6 are biased from the central plane α in the same direction by distances a1 and a2 respectively, and the point 7 is biased from the central plane α in opposite direction by a distance a3; wherein the point 6 is biased towards the crown 1, and a distance b1 between this point and the point 5 is smaller than a distance b2 between this point and the point 7.

The railway vehicle wheel (Embodiment 2) is made according to the Embodiment 1, wherein the distance b 1 between the point 5 and the point 6 is 1.1 times smaller than the distance b2 between the point 7 and the point 6.

The railway vehicle wheel (Embodiment 3) is made according to the Embodiment 1, wherein the distance b 1 between the point 5 and the point 6 is 4 times smaller than the distance b2 between the point 7 and the point 6.

The railway vehicle wheel (Embodiment 4) is made according to the Embodiment 1, wherein the distance b 1 between the point 5 and the point 6 is 1.2 times smaller than the distance b2 between the point 7 and the point 6.

The railway vehicle wheel (Embodiment 5) is made according to the Embodiment 1, wherein the distance b1 between the point 5 and the point 6 is 3 times smaller than the distance b2 between the point 7 and the point 6;

The railway vehicle wheel (Embodiment 6) is made according to any of embodiments 1-4, wherein the outer side of the web surface further comprises a radial curve R5 having a radius of 0.10 of a taping line;

The railway vehicle wheel (Embodiment 7) is made according to any of embodiments 1-5, wherein a ratio of a thickness t1 of the web 3 in the point 5 to a thickness t3 of the web 3 in the point 7 is 1, while a ratio of a thickness t2 of the web 3 in the point 6 to the thickness t3 of the web 3 in the point 7 is 0.8;

The railway vehicle wheel (Embodiment 8) is made according to any of embodiments, wherein the inner side of the web surface is composed of radial curves R6 having a radius of 0.079 of the taping line, R8 having a radius of 0.059 of the taping line, R9 having a radius of 0.1 of the taping line, and R7 having a radius of 0.15 of the taping line, and the outer side of the web surface is composed of radial curves R1 having a radius of 0.039 of the taping line, R3 having a radius of 0.079 of the taping line, R4 having a radius of 0.12 of the taping line, R5 having a radius of 0.15 of the taping line, and R2 having a radius of 0.05 of the taping line; wherein the ratio of the thickness t1 of the web 3 in the point 5 to the thickness t3 of the web 3 in the point 7 is at least 1.1, and the ratio of the thickness t2 of the web 3 in the point 6 to the thickness t3 of the web 3 in the point 7 is at least 0.9; wherein the distance a1 between the point 5 and the central plane α is 0.15 of the width of the crown 1, the distance a2 between the point 6 and the central plane α is 0.34 of the width of the crown 1, and the distance a3 between the point 7 and the central plane α is 0.90 of the width of the crown 1.

Selection of the optimal shape of the wheel web, according to the invention, is made using finite-element simulation of various variants of the structure according to the technology as described in the standard EN 13979-1:2003+A2:2011 that allows to determine a strain-stress state of the wheel caused by mechanical loads which are the most critical during operation, as well as a stress range being a criterion of the endurance strength.

According to EN 13979-1:2003+A2:2011, stress conditions of all-rolled wheels of the prototype structure and the claimed structures have been tested.

In order to evaluate the stress condition for all the structures, von Mises equivalent stresses have been calculated, in particular, for the worst case of the operational stress that corresponds to movement of a wheel pair along a curved track section, when a horizontal lateral force acts onto a flange of one of the wheels, and a vertical force which is biased towards the flange acts onto a crown. Also, the following parameters have been measured: stress range (Δσ, MPa) for axial load of 25 tf and a lateral deformation of the crown of the new and worn wheel during braking (Δy, mm).

| Example | | Parameters | | | | |
|---|---|---|---|---|---|---|
| Stress equiv., MPa | | | □□, MPa | | New, Δy, mm | Worn, Δy, mm |
| Prototype | | 270.3 | 315.3 | +1.76 | +1.31 | |
| 1 | 224.4 | 293.3 | +1.38 | +0.97 | | |
| 2 | 235.6 | 298.4 | +1.35 | +0.99 | | |
| 3 | 220.1 | 294.5 | +1.34 | +0.97 | | |
| 4 | 233.5 | 297.3 | +1.31 | +0.98 | | |
| 5 | 222.8 | 295.6 | +1.28 | +0.95 | | |
| 6 | 215.4 | 291.7 | +1.27 | +0.96 | | |
| 7 | 214.1 | 290.0 | +1.29 | +0.98 | | |
| 8 | 212.3 | 286.9 | +1.29 | +0.96 | | |

According to results of the tests conducted according to the requirements of EN 13979-1:2003+A2:2011, the structure of the railway vehicle wheel according to all the claimed embodiments of the invention has better strength characteristics of the web as compared to the wheel structures of the same purpose, at the same time providing less stress due to thermal influence that takes place during braking by means of braking shoes.

Furthermore, selection of optimal shape of the wheel web can provide high performance characteristics of the railway wheel, including low-stress condition of the wheel caused by action of operational stresses; a high degree of endurance strength that is characterized by minimum stress range among all the known analogues.

Also, another advantage lies in increase of the web strength in a near-hub portion due to local thickening of the web in the critical connection site of the web and the hub, thereby positively affecting safety during operation of a rolling stock.

This provides achievement of the technical effect that lies in increase of the reliability of the railway transport wheel, thereby improving the performance characteristics of the railway vehicle wheel.

## Claims

1. A railway vehicle wheel comprising a crown, a hub and a web, while a central axial line of a transversal profile of the web is formed by a curve that passes through three points, while a first point is arranged in a connection site of the web and the crown, a second point is arranged in a central portion of the web, and a third point is arranged in a connection site of the web and the hub, and the first point and the second point are biased in the same direction from a central sectional plane of the wheel, while the third point is biased in opposite direction from both the central sectional plane of the wheel and these points, **characterized in that** the second point is further biased towards the crown, and a distance between this point and the third point is greater than a distance between this point and the first point.

2. The wheel according to claim 1, **characterized in that** a distance between the first point and the second point is 1.1-4 times smaller than a distance between the third point and the second point.

3. The wheel according to claim 3, **characterized in that** the distance between the first point and the second point is 1.2-3 times smaller than the distance between the third point and the second point.

4. The wheel according to claim 1, **characterized in that** a distance between the first point and the central sectional plane of the wheel is 0.081-0.150 of the crown width, a distance between the second point and the central sectional plane of the wheel is not more than 0.34 of the crown width, and a distance between the third point and the central sectional plane of the wheel is 0.11-0.90 of the crown width.

5. The wheel according to claim 1, **characterized in that** a thickness of the cross section of the web increases from the first point to the third point or only from the second point to the third point.

6. The wheel according to claim 5, **characterized in that** the thickness of the cross section of the web in the third point is increased by altering a geometry of a radial curve that outlines a cross section of a concave portion of an outer surface of the web that is located in a gap between the second point and the third point due to an additional radial curve that is provided at an intersection between the outlined line and the central sectional plane of the wheel.
